## Europäisches Patentamt
## European Patent Office
## Office européen des brevets

(19)

(11) Veröffentlichungsnummer: **0 157 133 B1**

(12) **EUROPÄISCHE PATENTSCHRIFT**

(45) Veröffentlichungstag der Patentschrift:
03.06.87

(51) Int. Cl.⁴: **C 09 D 5/08,** C 09 D 3/81, C 08 L 33/06

(21) Anmeldenummer: **85101666.7**

(22) Anmeldetag: **15.02.85**

(54) **Bindemittel für Korrosionsschutzanstriche auf Basis von Poly(meth)-acrylat-Latices und wasserlöslichen polymeren Zinkkomplexsalzen.**

(30) Priorität: **22.02.84 DE 3406321**

(43) Veröffentlichungstag der Anmeldung:
**09.10.85 Patentblatt 85/41**

(45) Bekanntmachung des Hinweises auf die Patenterteilung:
**03.06.87 Patentblatt 87/23**

(84) Benannte Vertragsstaaten:
**AT BE CH DE FR GB IT LI NL SE**

(56) Entgegenhaltungen:
**DE - B - 1 192 767**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Ley, Gregor, Dr., In den Trankstuecken, D-6719 Wattenheim (DE)**
Erfinder: **Kossmann, Heribert, Dipl.-Ing., Windestrasse 30, D-6700 Ludwigshafen (DE)**
Erfinder: **Wistuba, Eckehardt, Dr., Im Obergarten 7, D-6702 Bad Duerkheim (DE)**

ACTORUM AG

**Beschreibung**

Die vorliegende Erfindung betrifft wässrige Polymerdispersionen, die als Bindemittel für Korrosionsschutzfarben mit guter Haftung bei Feuchtigkeitsbelastung eingesetzt werden können.

Korrosionsschutzanstriche sind Beschichtungsstoffe, deren korrosionsschützende Wirkung einerseits durch das Bindemittel und andererseits durch die Pigmente bzw. Füllstoffe bestimmt werden. Prinzipiell werden bei der Pigmentierung von Korrosionsschutzanstrichmitteln zwei Richtungen verfolgt, und zwar die Pigmentierung mit Aktivpigmenten, wie Zinkchromat, Zinkborat und Zinkphosphat, oder die Pigmentierung mit indifferenten blättchenförmigen Pigmenten bzw. Füllstoffen, wie Aluminiumpulver, Glimmer und Talkum entsprechend dem Barriereprinzip.

Als Bindemittel für die Korrosionsschutzanstriche werden Polykondensate, z.B. Alkydharze, Polyaddukte, wie Epoxid- und Polyurethanharze sowie Polymerisate, wie Vinylchlorid-Maleinsäureester-Copolymere und Polyacrylatharze, eingesetzt. Bei der Herstellung der klassischen Korrosionsschutzanstriche werden die hochmolekularen Stoffe in organischen Lösemitteln gelöst. Diese Lösemittel verdunsten nach der Applikation und belasten die Umwelt. Umweltfreundlichere Anstrichstoffe für den Korrosionsschutz werden daher mit wasserverdünnbaren Bindemitteln, z.B. Alkydharzemulsionen, wasserverdünnbaren Alkydharzen und wässrigen Polymerdispersionen formuliert.

Von den wässrigen Polymerdispersionen, die als Bindemittel für Korrosionsschutzanstriche eingesetzt werden, wird verlangt, dass sie in Wasser wenig quellen. Weiterhin müssen die Polymerdispersionen stabil gegenüber Metallionen, wie Zn-Ionen, sein, damit der Einsatz aktiver Pigmente, z.B. Zinkphosphat, möglich ist. Gute Haftung auf verschiedenen Metallen, wie nicht vorbehandeltem Eisen, sind neben guter Witterungs- und Kreidungsbeständigkeit weitere Forderungen, die ein Bindemittel erfüllen muss.

Als Nachteil vieler wässriger Polymerdispersionen ist deren Ionenempfindlichkeit zu nennen, die den Einsatz der aktiven Korrosionsschutzpigmente, z.B. Zinkphosphat, praktisch unmöglich macht, da die Dispersionen koagulieren. Darüber hinaus ist die Wasserempfindlichkeit vieler Polymerdispersionen unzureichend. Der Polymerfilm quillt stark, es entstehen Blasen, der Film löst sich. Bei mechanischer Beanspruchung wird der gequollene Film beschädigt. Dies beeinträchtigt den Korrosionsschutz.

Aus der DE-AS 2 337 606 ist zwar schon ein korrosionshemmendes wässriges Anstrichmittel bekannt, das ein synthetisches Polymeres, das in Wasser bei pH 3 bis 11 unlöslich ist und eine Metallkomplexverbindung, wie besonders Zink-ammoniumcarbonat, in Mengen von 0,2 bis 20 mMol/Mol Wasser als Latex enthält, bei der die komplexbildende Komponente flüchtig sein soll. Derartige Anstrichmittel weisen jedoch folgende Nachteile auf: Die Filme werden aufgrund von Unverträglichkeiten z.T. trüb. Bei hohen Dosierungen kann es sogar zu weissen Ausblühungen kommen. Aufgrund der heterogenen Verteilung wird der Korrosionschutz und z.T. die Haftung auf dem Untergrund ungünstig beeinflusst.

Die DE-A-1 192 767 betrifft, wie schon aus dem Titel und dem ersten Satz von Spalte 1 hervorgeht, ausschliesslich nicht-pigmentierte Überzugsmassen. Sie enthalten mindestens 40 Gew.-% Zinkkomplexsalze von polymeren Polycarbonsäuren. Aufgrund dieser Zusammensetzung ist die korrosionsschützende Wirkung von Anstrichen mit Überzugsmassen, wie sie darin offenbart werden, gering, besonders gering bei solchen Überzugen, die lediglich ein Halbamid-halbammoniumsalz der Polycarbonsäure, nicht aber ein Zinkammoniumsalz der Polycarbonsäure enthalten.

Der vorliegenden Erfindung liegt die Aufgabe zugrunde, ein Bindemittel für wässrige Korrosionsschutzanstrichstoffe, das frei von obengenannten Nachteilen ist, zur Verfügung zu stellen.

Es wurde nun gefunden, dass sich Bindemittel aus im wesentlichen

A) 99 bis 85 Gew.-% wässrigen Dispersionen von (Meth)acrylsäurealkylester-Copolymerisaten eier minimalen Filmbildetemperatur (MFT) von +15 bis +50°C
und
B) 2 bis 15 Gew.-% wässrigen Lösungen von Poly-(meth)acrylsäure-Zinkamin-Komplexen,

wobei die Angaben in Gew.-% auf die gesamte Polymerisatmenge der Komponenten A) und B) bezogen ist, und die Copolymerisate der Komponente A) einen mittleren Teilchendurchmesser von 0,01 bis 0,5 μm haben, besonders gut für Korrosionsschutzanstriche eignen.

Die als Komponente A) geeigneten wässrigen (Meth)acrylsäurealkylester-Copolymerisat-Dispersionen einer MFT von +15 bis +50°C, deren Copolymerisate einen mittleren Teilchendurchmesser von 0,01 bis 0,5 μm haben, enthalten im allgemeinen mindestens 30 Gew.-%, bezogen auf das Polymerisat, an (Meth)acrylsäurealkylestern einpolymerisiert, die sich im allgemeinen von 1 bis 12 C-Atome enthaltenden Alkanolen, vorzugsweise von 1 bis 4 C-Atome enthaltenden Alkanolen, wie Methanol, Ethanol, Isopropanol, n-Butanol und/oder Isobutanol ableiten. Von besonderem Interesse sind Copolymerisate des Methacrylsäuremethylesters, des Acrylsäure-n-butylesters und des Acrylsäureisobutylesters. Die Copolymerisate können auch untergeordnete Mengen an 2-Ethylhexylacrylat einpolymerisiert enthalten. Als Comonomere kommen in Mengen bis zu 70 Gew.-% auch Vinylester, wie Vinylacetat und Vinylpropionat sowie insbesondere Styrol, sowie gegebenenfalls bis zu 20 Gew.-% Acrylnitril und/oder Vinylchlorid sowie in Mengen bis etwa 10 Gew.-% meist 3 bis 5 C-Atome enthaltende α,β-monoolefinisch ungesättigte, 3 bis 5 C-Atome enthaltende Mono- und/oder Dicarbonsäure, wie Acrylsäure, Methacrylsäure, Itakonsäure oder Maleinsäure sowie deren gegebenenfalls an den Stickstoffatomen substituierte Amide, wie Acrylamid, Methacrylamid, N-Methylacrylamid, N-Methylmethacrylamid, N-Methylolacrylamid und -methacrylamid, Maleinsäureimid und Maleinsäuremonoethylester in Frage. Von besonderem Interesse sind Dispersionen von Copolymerisaten aus 35 bis 60% ihres Gewichts n-Butylacrylat und/oder Isobutylacrylat, 40 bis 65% ihres Gewichts Styrol, 1 bis 5% ihres Gewichts Acryl- und/oder Methacrylsäure und 1 bis 3,5% ihres Gewichts Acryl- und/oder Methacrylamid. Derartige Copolymerisate haben eine MFT von + 15 bis 50°C, sind im Handel erhältlich und können in an sich üblicher Weise hergestellt sein. Sie enthalten im allgemeinen die üblichen nichtionischen Emulgiermittel sowie gegebenenfalls zusätzlich bis zu 80%, vorzugsweise 25 bis 75%, bezogen auf die Gesamtmenge der Emulgiermittel, übliche organische Emulgiermittel, wobei die Gesamtmenge der Emulgiermittel, bezogen auf das Copolymerisat, meist 1,5 bis 6 Gew.-% beträgt. Zusätzlich können sie übliche Schutzkolloide sowie gegebenenfalls weitere Hilfsstoffe enthalten. Die Dispersionen weisen meist Feststoffgehalte von 20 bis 60, insbesondere von 40 bis 55 Gew.-% auf, und die K-Werte der Copolymerisate, gemessen nach DIN 53 276 in Tetrahydrofuran (THF) betragen meist 35 bis 90. Der bevorzugte Teilchengrössenbereich beträgt 0,05 bis 0,25 μm und die Viskositäten der 50%igen Dispersionen betragen meist 3000 bis 100, vorzugsweise 2000 bis 1000 mPa.s. Der pH-Wert der erfindungsgemäss zu verwendenden Copolymerisatdispersionen liegt im allgemeinen bei 7 bis 11, oft bei 8 bis 10.

Als Komponente B) wird eine wässrige Lösung eines Zinkkomplexsalzes einer polymeren Polycarbonsäure eingesetzt, dessen K-Wert, gemessen nach DIn 53 726 in THF, meist 8 bis 40, bevorzugt 10 bis 25, beträgt. Die polymere Polycarbonsäure enthält meist 20 bis 100 Gew.-% eines oder mehrerer α,β-monoethylenisch ungesättigter Mono- und/oder Dicarbonsäuren, die wie Acrylsäure, Methacrylsäure, Itakonsäure und Maleinsäureanhydrid meist 3 bis 5 C-Atome enthalten und 0 bis 80 Gew.-% anderer, in Wasser unlöslicher α,β-monoethylenisch ungesättigte Monomere, wie (Meth)acrylsäureester, die sich z.B. von 1 bis 12 C-Atome enthaltenden Alkoholen, wie Methanol, Ethanol, Isopropanol, n-Butanol und/oder Isobutanol ableiten, Styrol und/oder Acrylnitril einpolymerisiert. Von besonderem Interesse sind Copolymerisate, die 35 bis 60 Gew.-% Acrylsäure und/oder Methacrylsäure sowie 65 bis 40 Gew.-% Styrol einpolymerisiert enthalten. Derartige Copolymerisate haben vorzugsweise Säurezahlen von 210 bis 500 mg KOH/g. Sie können in an sich üblicher Weise als Substanz oder Lösungspolymerisat hergestellt sein. Bevorzugt werden sie nach dem in der DE-OS 3 034 171 beschriebenen Verfahren hergestellt. Die Überführung dieser festen Copolymerisate in die gelöste Form kann durch Lösen dieser Harze in ammoniak- oder aminhaltigem Wasser erfolgen. Als Amine kommen hierfür Alkyl- und Hydroxylalkylamine, wie Ethanolamin, Triethylamin, Ethyldimethylamin und Triethanolamin in Frage; bevorzugt wird Ammoniak eingesetzt. Der Ammoniak- bzw. Amingehalt wird vorzugsweise so gewählt, dass die Lösung, bezogen auf den Carboxylgruppengehalt einen 2- bis 6molaren Überschuss enthält. In diese alkalische Polymerlösung werden, bezogen auf die Carboxylatgruppen, im allgemeinen 0,8 bis 1,2 Äquivalente Zinkoxid eingetragen und im allgemeinen unter Rühren bei Temperaturen von 10 bis 90°C, gegebenenfalls unter Druck, gelöst.

Die Herstellung der erfindungsgemässen Bindemittel für wässrige Korrosionsschutzanstriche erfolgt durch Mischen der gegebenenfalls mit Wasser verdünnten Komponente B) mit der Komponente A), indem vorzugsweise die Komponente B) unter Rühren in die Komponente A) gegeben wird. Dabei hat es sich als günstig erwiesen, der Komponente A) vor der Zugabe der Komponente B) 0,5 bis 4 Gew.-% Glykolether, z.B. Reaktionsprodukte von $C_1$ bis $C_4$-Alkoholen mit Ethylenoxid und/oder Propylenoxid, wie Butylglykol, Butyldiglykol und Dipropylenglykolmonomethylether (Isomerengemisch) zuzusetzen.

Der überschüssige Ammoniak bzw. Amin kann gegebenenfalls vertrieben oder chemisch, z.B. mit Formaldehyd, gebunden werden.

Die erfindungsgemässen Gemische können mit besonderem Vorteil als Bindemittel zur Herstellung von Korrosionsschutzanstrichen angewandt werden. Die Pigmentierung kann z.B. mit Aktivpigmenten, wie Zinkphosphat und Zinkborat, die in Mengen von oft 3 bis 25% eingesetzt werden, erfolgen.

Als Füllstoffe eignen sich z.B. Calcite, Dolomite, Schwerspat, Talkum und Glimmer, die im allgemeinen in Mengen von 5 bis 30 Gew.-% mitverwendet werden können.

Zur Filmbildung können übliche Filmbildehilfsmittel, wie Glykolether, Glykoletheracetate, aromatenhaltige Testbenzine und Abkömmlinge des Propylenoxids mit Alkoholen in Mengen von meist 1 bis 5 Gew.-% mitverwendet werden.

Weitere Hilfsmittel, die den Korrosionsschutzfarben zugesetzt werden können, sind z.B. Verdicker, z.B. auf Polyurethanbasis, und Entschäumer, beispielsweise auf Basis von Mineralöl oder Silicon.

Die Herstellung der Korrosionsschutzanstrichmittel kann nach den üblichen Methoden erfolgen. Die Korrosionsschutzanstrichmittel können durch Spritzen, Streichen, Rollen, Tauchen oder Fluten auf die Untergründe, z.B. auf metallische Untergründe, insbesondere aus Eisen oder Stahl, aufgebracht werden.

Die in den folgenden Beispielen angegebenen Teile und Prozente beziehen sich auf das Gewicht.

*Beispiel 1 bis 3*

*Herstellung von Bindemitteln (1), (2) und (3) für Korrosionsschutzfarben*

Zu 945 Teilen Dispersion (1) bzw. (2) bzw. (3) werden unter Rühren bei Raumtemperatur 15 Teile Butylglykol und danach 40 Teile Komponente B) (in Form einer 45%igen Lösung) langsam zugegeben. Die so hergestellten Bindemittel (1) bis (3) haben einen Feststoffgehalt von 49 (1) bzw. 49 (2) bzw. 45 (3) %, einen pH-Wert von 9 (1) bzw. 8,5 (2) bzw. 8,5 (3) und eine Viskosität von 400 mPa.s (1), bzw. 380 mPa.s (2), bzw. 120 mPa.s (3).

Als *Dispersion 1* wird dabei eine in üblicher Weise hergestellte 50%ige wässrige Dispersion eines Emulsionsmischpolymerisats aus gleichen Teilen Styrol und n-Butylacrylat mit jeweils 2 Teilen Methacrylsäure und Acrylamid einer minimalen Filmbildetemperatur (MFT) von 22°C und einem Gehalt von 1,4% an mit 25 Mol/Mol ethoxiliertem und sulfatiertem Octylphenol (Na-Salz) und 0,7% mit 25 Mol/Mol ethoxyliertem Octylphenol;

als *Dispersion 2* eine in üblicher Weise hergestellte 50%ige wässrige Dispersion eines Emulsionsmischpolymerisats aus gleichen Teilen n-Butylacrylat und Methacrylsäuremethylester, 1 Teil Methacrylsäure und 1,4 Teilen Methacrylamid einer MFT von 16°C und einem Gehalt an 0,5 Teilen von mit 30 Mol/Mol ethoxyliertem und sulfatiertem p-Octylphenol und 0,4 Teilen ®Texapon K 12 (nichtionischer handelsüblicher Emulgator), und

als *Dispersion 3* eine in üblicher Weise hergestellte 45%ige wässrige Dispersion eines Emulsionsmischpolymerisats aus 64 Teilen Styrol, 32 Teilen iso-Butylacrylat, 1,3 Teilen Acrylsäure und 3 Teilen N-Methylolacrylamid einer MFT von 46°C mit einem Gehalt an 4% von mit 20 Mol/Mol ethoxyliertem und sulfatiertem Octylphenol und 1% mit 25 Mol/Mol ethoxyliertem Octylphenol eingesetzt, wobei die Angaben in % bei den Emulgatoren jeweils auf die Menge der Copolymerisate bezogen sind.

*Komponente B)*

In einem beheizbaren druckfesten Rührkessel legt man 55,9 Teile 25%ige wässrige Ammoniaklösung vor und löst darin unter Rühren 34,4 Teile eines nach den Angaben der DE-OS 3 034 171 hergestellten Copolymeren aus gleichen Teilen Styrol und Acrylsäure. In die Lösung trägt man unter Rühren 9,7 Teile Zinkoxid (Qualität Rotsiegel) ein, verschliesst den Kessel und erhitzt auf etwa 55°C. Nach Erreichen dieser Temperatur rührt man noch 3 Stunden, entspannt dann und kühlt auf Raumtemperatur ab. Man erhält eine 45%ige mittelviskose Lösung einer polymeren Polycarbonsäure, dessen K-Wert in THF 12 beträgt.

*Herstellung von Korrosionsschutzfarben (Grundierung)*

Die in der Rezeptur angegebenen Bestandteile werden in der aufgeführten Reihenfolge unter Rühren gemischt.

| | | |
|---|---:|---|
| Wasser | 36 | Teile |
| Natriumbenzoat | 4 | Teile |
| Ammoniumsalz einer Polyacrylsäure | 1 | Teil |
| Butylglykol | 10 | Teile |
| Mikronisiertes Zinkphosphat | 67 | Teile |
| Zinksalz der 5-Nitroisophthalsäure (Korrosions-Inhibitor) | 7 | Teile |
| Bindemittel (1 bzw. 2 bzw. 3) | 131 | Teile |
| Titandioxid Rutil | 51 | Teile |
| Chromoxidgrün | 40 | Teile |
| Bindemittel (1 bzw. 2 bzw. 3) | 51 | Teile |
| Calcit 5 µm | 65 | Teile |
| Testbenzin 140-210°C | 10 | Teile |
| Bindemittel (1 bzw. 2 bzw. 3) | 520 | Teile |
| Entschäumer (Gemisch aus Mineralöl, Fettseifen, Alkoholen und Emulgatoren) | 5 | Teile |
| | **998** | **Teile** |

PVK: ca. 17%
Viskosität-Rheomat 15, C 13: 500 (mPa.s)

Die Korrosionsschutzfarben (1), (2) und (3) werden derart auf entfettete blanke Tiefziehbleche aufgezogen, dass nach der Trocknung bei Raumtemperatur (3 Tage) eine Trockenschichtdicke von 50 µm bzw. 80 µm erhalten wird.

Nach der gleichen Rezeptur wird zum *Vergleich* eine Korrosionsschutzfarbe unter Einsatz von Dispersion (1) als Bindemittel hergestellt und auf Tiefziehbleche aufgezogen.

Die Prüfdaten sind in der folgenden Tabelle zusammengestellt.

TABELLE: Prüfdaten

| Prüfung | Schwitzwassertest nach DIN 50017 | Salzsprühtest nach DIN 50021 | Unterwanderung am Schnitt |
|---|---|---|---|
| **Beispiel 1** Trockenschichtdicke | | | |
| 50 µm | 40 Tage i.O. | 240 Std. i.O. | 1-2 mm |
| 80 µm | *gute* Nasshaftung | 480 Std. i.O. | 1-2 mm |
| **Beispiel 2** Trockenschichtdicke | | | |
| 50 µm | 40 Tage i.O. | 210 Std. i.O. | 1-2 mm |
| 80 µm | *gute* Nasshaftung | 480 Std. i.O. | 1-2 mm |
| **Beispiel 3** Trockenschichtdicke | | | |
| 50 µm | 40 Tage i.O. | 120 Std. i.O. | 1 mm |
| 80 µm | *gute* Nasshaftung | 360 Std. i.O. | 1 mm |
| **Vergleichsversuch** Trockenschichtdicke | | | |
| 50 µm | 40 Tage i.O. | 120 Std. i.O. | 10 mm |
| 80 µm | *schlechte* Nasshaftung | 240 Std. i.O. | 10 mm |

## Patentansprüche

1. Bindemittel für wässrige Korrosionsschutzanstriche auf Basis von Poly(meth)acrylat-Latices und wasserlöslichen Zinkkomplexsalzen, dadurch gekennzeichnet, dass sie im wesentlichen aus

A) 99 bis 85 Gew.-% wässrigen Dispersionen von (Meth)acrylsäurealkylester-Copolymerisaten einer MFT von +15 bis +50°C und

B) 1 bis 15 Gew.-% wässrigen Lösungen von Zinkkomplexsalzen von polymeren Polycarbonsäuren

bestehen, wobei die Angaben in Gew.-% auf die gesamte Polymerisatmenge der Komponenten A) und B) bezogen sind und die Copolymerisate der Komponente A) einen mittleren Teilchendurchmesser von 0,01 bis 0,5 μm haben.

2. Bindemittel nach Anspruch 1, dadurch gekennzeichnet, dass die Komponente B) durch Copolymerisation von

a) 20 bis 100 Gew.-% α,β-monoethylenisch ungesättigten, 3 bis 5 C-Atome enthaltenden Mono- und/oder Dicarbonsäuren und
b) 0 bis 80 Gew.-% anderen, in Wasser unlöslichen, α,β-monoethylenisch ungesättigten Monomeren und/oder Acrylnitril

hergestellt und in ammoniak-, amin- und/oder hydroxylaminhaltigem Wasser, das 2 bis 6 Mol Ammoniak bzw. Amin je Mol Carboxylgruppe enthält, gelöst und mit 0,8 bis 1,2 Äquivalenten Zinkoxid pro Carboxylgruppe umgesetzt ist.

## Claims

1. A binder for aqueous anticorrosive paints based on poly(meth)acrylate latices and watersoluble zinc complex salts, which consists essentially of

A) from 99 to 85% by weight of an aqueous dispersion of an alkyl (meth)acrylate copolymer having a mean film-forming temperature of from +15 to +50°C, and

B) from 1 to 15% by weight of an aqueous solution of a zinc complex salt of a polymeric polycarboxylic acid,

the percentages being based on the total amount of components A) and B) in the polymer, and the copolymer of component A) having a mean particle diameter of from 0.01 to 0. 5 μm.

2. A binder as claimed in claim 1, wherein the component B) is prepared by copolymerization of

a) from 20 to 100% by weight of α,β-monoethylenically unsaturated mono- and/or dicarboxylic acids of 3 to 5 carbon atoms, and
b) from 0 to 80% by weight of other, waterinsoluble α,β-monoethylenically unsaturated monomers and/or acrylonitrile,

is dissolved in ammonia-containing, amine-containing and/or hydroxylamine-containing water which contains from 2 to 6 moles of ammonia or an amine per mole of carboxyl groups, and is reacted with from 0.8 to 1.2 equivalents of zinc oxide per carboxyl group.

## Revendications

1. Liants pour peintures anti-corrosion aqueuse à base de latex de poly(méth)acrylate et de sels de complexes du zinc hydrosolubles, caractérisés en ce qu'ils sont essentiellement formés

A) de 99 à 85% en poids de dispersions aqueuses de copolymères de (méth)acrylates d'alkyle avec une température de formation d'une pellicule minimale comprise entre +15 et +50°C, et

B) de 1 à 15% en poids de solutions aqueuses de sels de complexes du zinc d'acides polycarboxyliques polymères,

les pourcentages en poids se rapportant au poids total des polymères contenus dans les composantes A) et B) et les copolymérisats de la composante A) possédant une granulométrie moyenne de 0,01 à 0,5 μm.

2. Liant suivant la revendication 1, caractérisé en ce que la composante B) a été obtenue par la copolymérisation de:

a) 20 à 100% en poids d'acides mono- et(ou) dicarboxyliques en C₃ à C₅ à insaturation α,β-mono-éthylénique avec

b) 0 à 80% en poids d'autres monomères à insaturation α,β-mono-éthylénique insoluble dans l'eau et(ou) de nitrile acrylique,

suivie d'une dissolution dans de l'eau contenant de l'ammoniac, une amine et(ou) une hydroxyl-amine en une proportion de 2 à 6 moles d'ammoniac ou d'amine par mole de groupes carboxyle, et de la réaction avec 0,8 à 1,2 équivalent d'oxyde de zinc par groupe carboxyle.